(19) Europäisches Patentamt
European Patent Office
Office européen des brevets

(11) Veröffentlichungsnummer: **0 024 623**
**B1**

# (12) EUROPÄISCHE PATENTSCHRIFT

(45) Veröffentlichungstag der Patentschrift: **13.04.83**

(51) Int. Cl.³: **C 07 F 9/65**

(21) Anmeldenummer: **80104746.5**

(22) Anmeldetag: **12.08.80**

(54) **Verfahren zur Herstellung von 0,0-Dialkyl-S-(benzazimido-methyl)-thiolphosphorsäureestern.**

(30) Priorität: **28.08.79 US 70478**

(43) Veröffentlichungstag der Anmeldung: **11.03.81 Patentblatt 81/10**

(45) Bekanntmachung des Hinweises auf die Patenterteilung: **13.04.83 Patentblatt 83/15**

(84) Benannte Vertragsstaaten: **BE CH DE FR GB IT LI NL**

(56) Entgegenhaltungen:
**GB-A-1 080 434**
**US-A-2 758 115**
**US-A-3 682 910**

(73) Patentinhaber: **Mobay Chemical Corporation, Penn Lincoln Parkway West, Pittsburgh, Pennsylvania 15205 (US)**

(72) Erfinder: **Prasad, Vidyanatha AV., 9909 Wedd Drive, Overland Park Kansas 66212 (US)**
Erfinder: **Vines, James Herbert, 7410 Terrace, Kansas City Missouri 61114 (US)**

(74) Vertreter: **Gremm, Joachim, Dr. et al, Bayer AG c/o Zentralbereich Patente, Marken und Lizenzen, D-5090 Leverkusen 1, Bayerwerk (DE)**

EP 0 024 623 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verfahren zur Herstellung von O,O-Dialkyl-S-(benzazimidomethyl)-thiolphosphorsäureestern

Die Erfindung betrifft Verbesserungen in der Herstellung von O,O-Dialkyl-S-(benzimidomethyl)-thiolphosphorsäureestern.

Die US-PS 2 758 115 beschreibt die Herstellung von O,O-Dialkyl-S-(benzazimidomethyl)-thiolphosphorsäureestern gemäß dem Reaktionsschema

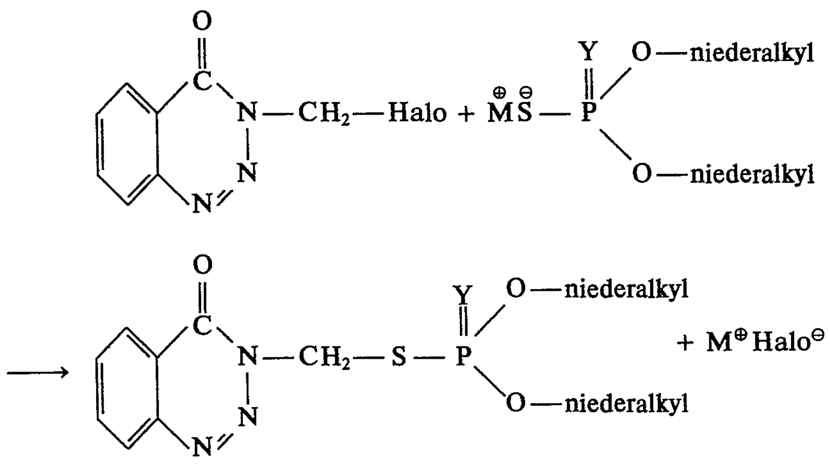

(I)

worin

Y Sauerstoff oder Schwefel,

M ein Alkalimetall- oder Ammoniumkation ist und der niedere Alkylrest, vorzugsweise 1 bis 4 C-Atome, enthält und insbesondere ein Methyl- oder Ethylrest ist, in wäßrig-alkalischem Medium.

Die Verbindungen Formel (I) sind äußerst wirksame Insekticide, insbesondere die Verbindung, in der Y Schwefel ist und die niederen Alkylreste Methylreste sind. Das Produkt wird in hoher Ausbeute und in mäßiger Reinheit erhalten; um jedoch die Reaktion bis zur Vollendung zu bringen, wird bei der Reaktion das Salz der Dialkylthiolphosphorsäure in einem erheblichen Überschuß verwendet. Beispielsweise ist ein Überschuß von 25% durchaus üblich, wobei die Reaktionsteilnehmer in wäßrigen Systemen bei pH-Werten im alkalischen Bereich umgesetzt werden. Beispielsweise wird das Natriumsalz der Dialkylthiolphosphorsäure durch Neutralisation der entsprechenden Säure beispielsweise mit Natriumhydroxid auf pH 8 bis 8,5 hergestellt und das Halogenmethylbenzazimid damit umgesetzt. Wenn das Salz einige Stunden stehen gelassen wird, fällt der pH-Wert etwas und kann nach einiger Zeit sogar einen Wert bis hinab zu 5,5 bis 6 erreichen, jedoch wird gewöhnlich das Salz in frisch hergestellter Form verwendet, so daß der höhere pH-Wert unverändert bleibt. Wie bereits erwähnt, ist das Verfahren durchaus befriedigend, und das Produkt hat einen erheblichen Erfolg erreicht. Das beim Verfahren verwendete überschüssige Salz muß jedoch beseitigt werden und verleiht auf Grund seines hohen Phosphor-, Schwefel- und Kohlenstoffgehalts dem Abwasser einen hohen CSB-Wert.

Die Erfindung stellt sich die Aufgabe, die Möglichkeit zu schaffen, das Verfahren ohne Verminderung der Ausbeute und/oder Reinheit durchzuführen, jedoch einen verringerten Überschuß des phosphor- und schwefelhaltigen Ausgangsmaterials zu verwenden.

Diese Aufgaben werden gemäß der Erfindung gelöst, gemäß der man die dargestellte Reaktion bei einem pH-Wert von 2,5 bis 3,6 beginnt und den als Ausgangsmaterial dienenden Thiolphosphorsäureester in einem stöchiometrischen Überschuß von 10 bis 16% einsetzt.

Der erniedrigte pH-Wert der Reaktion kann durch Zusatz einer Säure, z. B. einer Mineralsäure, beispielsweise einer Halogenwasserstoffsäure, insbesondere Salzsäure, zum Reaktionsmedium oder vorher zum Salz des Dialkylthiolphosphorsäureesters erreicht werden.

Die Reaktion wird vorteilhaft in wäßriger Lösung oder Suspension durchgeführt, obwohl auch organische Lösungsmittel anwesend sein können. Die Temperatur und die übrigen Bedingungen der Reaktion können die gleichen sein, wie sie bisher angewandt wurden, beispielsweise etwa 50 bis 75° C für einige Stunden. Bei Beendigung der Reaktion liegt eine organische Phase vor, die das gewünschte Produkt enthält, das in üblicher Weise von der wäßrigen Schicht abgetrennt und gereinigt werden kann.

Im Interesse der Sicherheit kann die Reaktion in einem emaillierten Reaktor durchgeführt werden.

Bei der Reinigung ist es vorteilhaft, nicht mehr Ätzalkali als notwendig für die Reinigung des Materials zu verwenden, da sonst die Ausbeuten verschlechtert werden können.

Es wurde versucht, den Reaktionswirkungsgrad durch Verringerung des Überschusses des Salzes

der Dialkylthiolphosphorsäure und durch Verwendung eines Phasenübertragungskatalysators, z. B. Benzyltriphenylphosphoniumchlorid oder Benzyltriäthylammoniumbromid, zu verbessern. Dies verbesserte überraschenderweise nicht den Wirkungsgrad, sondern hatte genau die entgegengesetzte Wirkung und hatte einen scharfen Abfall der Reinheit zur Folge, bedingt wahrscheinlich durch teilweise Zersetzung des Ausgangsmaterials.

Die Erfindung wird durch die folgenden Beispiele weiter erläutert. In diesen Beispielen vestehen sich alle Teile als Gewichtsteile, falls nicht anders angegeben.

## Beispiel 1

Eine 40%ige Lösung von 0,25 m des Natriumsalzes des O,O-Dimethyldithiophosphorsäureesters wurde in 10%igem stöchiometrischem Überschuß unter Rühren zu 0,25 m einer 40%igen Lösung von Chlormethylbenzazimid in Äthylendichlorid gegeben. Der pH-Wert wurde durch Zusatz von konzentrierter HCl von 7 auf 3,1 gebracht. Die 40%ige Chlormethylbenzazimidlösung war erhalten worden, indem die notwendige Lösungsmittelmenge von einer Lösung einer Konzentration von 20,5% unter Vakuum abgestreift wurde. Die Temperatur wurde auf 65° C erhöht und das Gemisch 4,5 Stunden bei 62 bis 63° C gehalten. Das Reaktionsgemisch wurde auf 35° C gekühlt und filtriert, um die Phasentrennung zu beschleunigen. Keine Feststoffe wurde auf dem Filterpapier festgestellt. Eine organische Schicht schied sich von einer wäßrigen Schicht ab, die verworfen wurde. In einen Kolben wurden 80 g einer 1,5%igen NaOH-Lösung gegeben. Die organische Schicht wurde der Natriumhydroxidlösung tropfenweise über einen Zeitraum von 15 Minuten bei 40° C zugesetzt. Nach erfolgter Zugabe betrug der pH-Wert 11,5. Das Gemisch wurde 30 Minuten bei 40° C gerührt. Es wurde dann durch einen Büchnertrichter unter Verwendung von 2 g eines Filterhilfsmittels filtriert. Die Phasen wurden getrennt. Die organische Phase wurde mit 150 ml Wasser gewaschen, worauf die Phasen getrennt wurden. Die organische Phase wurde getrocknet und auf einem Rotationsverdampfer abgestreift (40° C, etwa 100 mbar = 75 mm Hg). Das Produkt, der O,O-Dimethyl-S-(Benzazimido-methyl)-dithiophosphorsäureester, wurde auf eine gewogene Folie gegossen, über Nacht an der Luft getrocknet, gewogen und analysiert.

| | |
|---|---|
| Gewicht des Produkts: | 76,25 g; theoretisch 79,3 g |
| Rohausbeute: | 76,25/79,3 g = 96,15% der Theorie |
| Reinheit (analytisch ermittelt): | Reines Endprodukt: 91,3%; |
| | % Lösungsmittel: 0,47% (also trockenes Endprodukt: 91,7%); |
| | Rest % auf 100% : Verunreinigungen |

## Beispiel 2

Der in Beispiel 1 beschriebene Versuch wurde unter Verwendung eines 25%igen Überschusses des Esters wiederholt, jedoch wurde der pH-Wert nicht mit HCl gesenkt, sondern vorher durch Zusatz von Natriumbicarbonat auf 8,5 gebracht. Die Ausbeuten und die Reinheit waren mit den in Beispiel 1 genannten Werten vergleichbar.

## Beispiel 3

Der in Beispiel 2 beschriebene Versuch wurde wiederholt, wobei jedoch der Ester nur im Überschuß von 15% verwendet wurde. Die Reinheit fiel um 3 bis 4% ab, und die Ausbeute zeigte einen ähnlichen Abfall.

## Beispiel 4

Im wesentlichen die gleichen Ergebnisse wie in Beispiel 3 wurden erhalten, wenn das Natriumbicarbonat weggelassen wurde, wobei der pH-Wert der Lösung nach Stehenlassen von vorher 8 auf 6 fiel.

## Beispiel 5

Der in Beispiel 1 beschriebene Versuch wurde dreimal in einem größeren Maßstab unter Verwendung eines 15%igen Überschusses des Esters wiederholt. Bei den drei Versuchen wurden Produkte mit einer durchschnittlichen Reinheit von 93,1% auf Trockenbasis erhalten.

Die Parameter der verschiedenen Versuche einschließlich der in den Beispielen 1 bis 5 beschriebenen Versuche sind in der folgenden Tabelle genannt.

CMB = Chlormethylbenzazimid
DMS O,O-Dimethyl-dithiophosphorsäureester-Salz

| Beispiel | CMB + DMS Konzentration (%) der eingesetzten Lösungen (gemäß Beispiel 1) | | DMS-Überschuß, % | Kondensations-pH-Wert | Rohausbeute, bezogen auf CMB, % (1) | Produktreinheit trocken, % (2) | Nettoausbeute, % $\frac{(1)\times(2)}{100}$ | Bemerkung |
|---|---|---|---|---|---|---|---|---|
| 1 | 19,1 | 40,6 | 10 | 3,0 | 96,1 | 91,5 | 87,8 | |
| 2 | 19,1 | 39,9 | 25 | 8 bis 8,5 $NaHCO_3$ | 95,5 | 91 | 87,3 | |
| 3 | 19,1 | 39,9 | 15 | 8 bis 8,5 $NaHCO_3$ | 93,4 | 86 | 80,1 | |
| 4 | 19,1 | 39,9 | 15 | begann bei 8, fiel in 1 Std. auf 6 | 95,4 | 87,8 | 82,9 | |
| 5a | 19,2 | 41,2 | 14 | 3,0 konz. HCl | 95,6 | 92,8 | 88,7 | |
| 5b | 19,2 | 41,2 | 14 | 3,0 konz. HCl | 96,1 | 92,2 | 88,6 | |
| 5c | 19,1 | 40,6 | 16 | 3,0 konz. HCl | 97,2 | 94,2 | 91,5 | |
| 6 | 18,6 | 39,2 | 25 | 8 bis 8,5 $NaHCO_3$ | 94,5 | 92,5 | 87,2 | |
| 7 | 18,6 | 39,2 | 15 | 8 bis 8,5 $NaHCO_3$ | 91,6 | 90,0 | 82,5 | |
| 8 | 18,6 | 39,2 | 15 | begann bei 8, fiel in 1 Std. auf 6 | | | | |
| 9 | 18,5 | 40,9 | 25 | begann bei 8, fiel in 1 Std. auf 6 | 98,8 | 89,5 | 88,4 | |
| 10 | 18,5 | 40,9 | 25 | 8 bis 8,5 $NaHCO_3$ | 99 | 92 | 91,1 | |
| 11 | 19,1 | 40,2 | 15 | begann bei 8, fiel in 1 Std. auf 6 | 94,5 | 88,5 | 83,6 | |
| 12 | 19,1 | 40,2 | 25 | 8 bis 8,5 $NaHCO_3$ | 96,1 | 92,8 | 89,1 | |
| 13 | 19,1 | 40,6 | 25 | 3,6 | 94,5 | 94 | 87,9 | |
| 14 | 19,1 | 40,6 | 25 | 8 bis 8,5 $NaHCO_3$ | 95,6 | 91,5 | 87,0 | |
| 15 | 19,1 | 40,6 | 10 | 3,6 | 97,2 | 90,8 | 88,1 | a) |
| 16 | 19,1 | 40,6 | 10 | 3,6 | 93 | 90,6 | 84,1 | b) |
| 17 | 19,1 | 41,2 | 25 | 8 bis 8,5 $NaHCO_3$ | 95,2 | 92,3 | 87,6 | a) |
| 18 | 19,1 | 41,2 | 15 | 3,1 | 97,3 | 92,0 | 89,0 | a) |
| 19 | 19,5 | 39,2 | 15 | 3,5 | 96,8 | 90,2 | 87,3 | |
| 20 | 19,5 | 39,2 | 25 | 8 bis 8,5 $NaHCO_3$ | 95,7 | 90,1 | 86,2 | |
| 21 | 20,5 | 39,2 | 25 | 8 bis 8,5 $NaHCO_3$ | 88,6 | 92,0 | 81,9 | c) |

Fortsetzung

| Beispiel | CMB + DMS Konzentration (%) der eingesetzten Lösungen (gemäß Beispiel 1) | | DMS-Überschuß, % | Kondensations-pH-Wert | Rohausbeute, bezogen auf CMB, % (1) | Produktreinheit trocken, % (2) | Nettoausbeute, % $\frac{(1) \times (2)}{100}$ | Bemerkung |
|---|---|---|---|---|---|---|---|---|
| | CMB | DMS | | | | | | |
| 22 | 20,5 | 39,2 | 10 | 2,5 | 90,1 | 91,6 | 82,4 | c) |
| 23 | 18,8 | 43,8 | 25 | 8 bis 8,5 $NaHCO_3$ | 98,8 | 92,3 | 91,2 | |
| 24 | 18,8 | 43,8 | 12,5 | 3,1 | 100 | 92,8 | 92,8 | |

Bemerkungen:

a) Alkaliwäsche 0,5 Std. bei 40°C auf pH 11.
b) Alkaliwäsche bei 60°C.
c) Ein geringer Fehler bei der Anfangs-CMB-Reinheit wird angenommen, da die Rohausbeute und die Nettoausbeute etwas höher sein müßten.

**Patentansprüche**

1. Verfahren zur Herstellung von O,O-Di-niederalkyl-S-(benzazimidomethyl)-thiolphosphorsäureestern durch Umsetzung eines Halogenmethylbenzazamids mit einem O,O-Di-niederalkylthiolphosphorsäureester

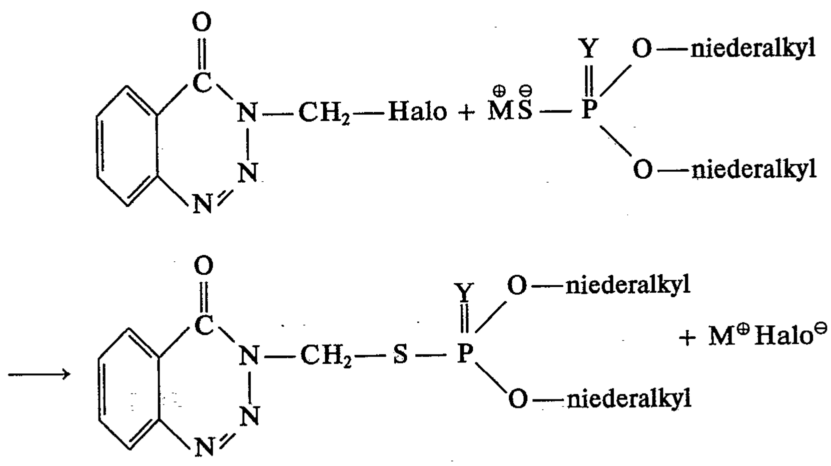

worin

Y Sauerstoff oder Schwefel und
M ein Alkalimetall- oder Ammoniumkation ist,

dadurch gekennzeichnet, daß man den Thiolphosphorsäureester in einem 10 bis 16%igen stöchiometrischem Überschuß einsetzt und die Reaktion bei einem pH-Wert von 2,5 bis 3,6 beginnt.

2. Verfahren nach Anspruch 1, dadurch gekennzeichnet, daß Y Schwefel, der niedere Alkylrest ein Methyl- oder Äthylrest, das Halogenatom ein Chloratom und M Natrium ist.

3. Verfahren nach Anspruch 1, dadurch gekennzeichnet, daß man zur Einstellung des pH-Wertes als Säure HCl verwendet.

**Claims**

1. Process for the preparation of O,O-di-lower alkyl-S-(benzazimidomethyl)-thiol phosphoric acid esters by reacting a halomethylbenzazamide with an O,O-di-lower alkyl-thiolphosphoric acid ester in

accordance with the reaction equation

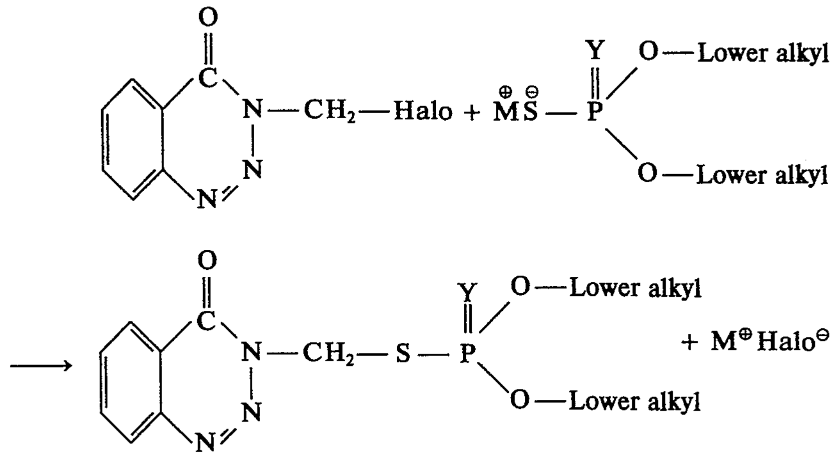

wherein

Y is oxygen or sulphur and
M is an alkali metal cation or ammonium cation,

characterised in that the thiolphosphoric acid ester is employed in a 10 to 16% stoichiometric excess and the reaction is started at a pH value of 2.5 to 3.6.

2. Process according to Claim 1, characterised in that Y is sulphur, the lower alkyl radical is a methyl or ethyl radical, the halogen atom is a chlorine atom and M is sodium.

3. Process according to Claim 1, characterised in that to adjust the pH value HCl is used as the acid.

**Revendications**

1. Procédé de production d'esters de O,O-dialkyle inférieur et de S-(benzazimidométhyle) d'acide thiolphosphorique par réaction d'un halogénométhylbenzazamide avec un ester de O,O-di-alkyle inférieur d'acide thiolphosphorique conformément au schéma réactionnel

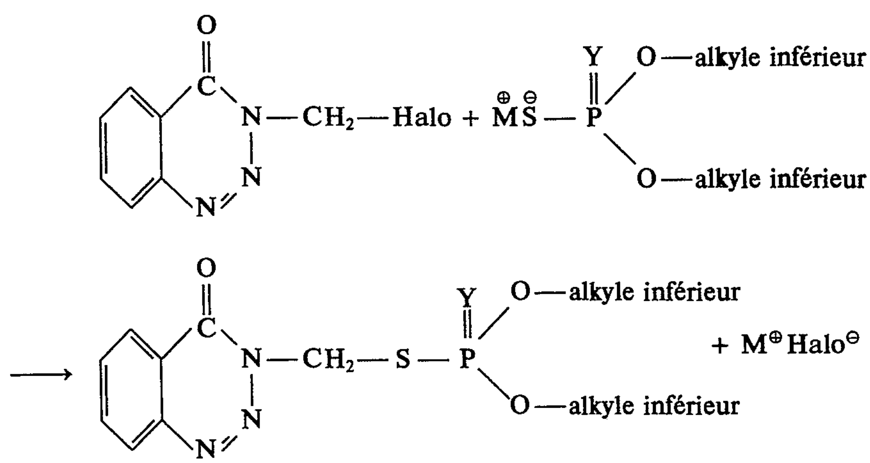

ou

Y désigne l'oxygène ou le soufre et
M est un cation de métal alcalin ou d'ammonium,

caractérisé en ce qu'on utilise l'ester d'acide thiolphosphorique en un excès stoechiométrique de 10 à 16% et la réaction débute à un pH de 2,5 à 3,6.

2. Procédé selon la revendication 1, caractérisé en ce que Y est le soufre, le reste alkyle inférieur est un reste méthyle ou éthyle, l'atome d'halogène est un atome de chlore et M est le sodium.

3. Procédé selon la revendication 1, caractérisé en ce qu'on utilise HCl comme acide pour ajuster la valeur du pH.